# EUROPEAN PATENT APPLICATION

(11) **EP 2 373 072 A1**
(43) Date of publication of application: **05.10.2011**
(21) Application number: 11002761.2
(22) Date of filing: 01.04.2011
(51) Int. Cl.: H04W 8/20

(54) **Method of handling system information acquisition and related communication device**

(30) Priority: 02.04.2010 US 320318 P; 31.03.2011 US 77910
(71) Applicant: HTC Corporation, Taoyuan County 330 (TW)
(72) Inventor: Kone, Mamadou, Taoyuan City Taoyuan County 330 (TW)
(74) Representative: Schmidbauer, Andreas Konrad

(57) **Abstract**

A method of handling system information acquisition for a mobile device in a wireless communication system is disclosed. The method comprises determining whether to perform a system information acquisition procedure according to a value tag included in a system information received from a network of the wireless communication system, and performing the system information acquisition procedure for a commercial mobile alert system (CMAS) notification only when an indication corresponding to the CMAS notification is received, with regardless of the value tag in the system information.

## Description

### Cross Reference To Related Applications

This application claims the benefit of U.S. Provisional Application No. 61/320,318, filed on April 2, 2010 and entitled "Methods for UE to avoid invalidating CMAS notification when the System Information is updated", the contents of which are incorporated herein in their entirety.

### Background of the Invention

### 1. Field of the Invention

The application relates to a method utilized in a wireless communication system and a communication device thereof, and more particularly, to a method of handling system information acquisition in a wireless communication system and a related communication device.

### 2. Description of the Prior Art

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

In the LTE system, a UE applies system information acquisition procedure to acquire system information broadcasted by the E-UTRAN upon selecting (e.g. upon power on) and upon re-selecting a cell, after handover completion, after entering E-UTRA from another RAT, upon return from out of coverage, upon receiving a notification that the system information has changed, upon receiving an indication about the presence of an Earthquake and Tsunami Warning System (ETWS) notification, upon receiving an indication about the presence of a Commercial Mobile Alert System (CMAS) notification, etc. Note that, unless explicitly stated otherwise the system information acquisition procedure overwrites any stored system information.

In addition, the UE in RRC_IDLE or in RRC_CONNECTED shall have a valid version of "MasterlnformationBlock", "SystemInformationBlockType1", "SystemInformationBlockType2", and "SystemInformationBlockType8", depending on support of radio access technologies (RATs), otherwise the UE performs the system information acquisition procedure to acquire these required system information.

Moreover, for emergency reason, Federal Communications Commission (FCC) introduces ETWS and CMAS, which allow wireless service providers to send emergency alerts as text messages to their users. Take CMAS for example, when a CMAS capable UE acquires "SystemInformationBlockType1" following a CMAS indication included in a received page message, upon entering a cell during RRC_IDLE, following successful handover and upon connection re-establishment, the UE performs the system information acquisition procedure to acquire "SystemInformationBlockType12" (namely CMAS notification) according to "schedulingInfoList" contained in "SystemInformationBlockType1" (e.g. the "schedulingInfoList" indicates that "SystemInformationBlockType12" is present).

On the other hand, a UE verifies that stored system information remains valid by checking "SystemInfoValueTag" included in "SystemInformationBlockType1". In a word, the UE considers all stored system information to be invalid when "SystemlnfoValueTag" in the "SystemInformationBlockType1" is different from the one of the stored system information, and thereby performs the system information acquisition procedure to reacquire the system information.

However, the applicant noticed a problem related to "SystemInfoValueTag" and CMAS notification ("SystemInformationBlockType12"). For a CMAS capable UE, when the stored system information are invalid after modification period boundary (namely "SystemInfoValueTag" update), the UE considers the CMAS notification ("SystemInformationBlockType12") as invalid along with other stored system information, and automatically performs the system information acquisition procedure to reacquire "SystemInformationBlockType12". In this situation, an error occurs since no CMAS notification is present (i.e. no CMAS indication is received).

### Summary of the Invention

The application discloses a method of handling system information acquisition in a wireless communication system and a related communication device in order to solve the abovementioned problems.

A method of handling system information acquisition for a mobile device in a wireless communication system is disclosed. The method comprises determining whether to perform a system information acquisition procedure according to a value tag included in a system information received from a network of the wireless communication system, and performing the system information acquisition procedure for a commercial mobile alert system notification only when an indication corresponding to the CMAS notification is received, with regardless of the value tag in the system information.

A mobile device of a wireless communication system for handling system information acquisition is disclosed. The mobile device comprises means for determining whether to perform a system information acquisition procedure according to a value tag included in a system information received from a network of the wireless communication system, and means for performing the system information acquisition procedure for a commercial mobile alert system notification only when an indication corresponding to the CMAS notification is received, with regardless of the value tag in the system information.

These and other objectives of the present invention will no doubt become obvious to those of ordinary skill in the art after reading the following detailed description of the preferred embodiment that is illustrated in the various figures and drawings.

### Brief Description of the Drawings

Fig. 1 illustrates a schematic diagram of an exemplary wireless communication system.

Fig. 2 illustrates a schematic diagram of an exemplary communication device.

Fig. 3 illustrates a schematic diagram of communication protocol layers for an exemplary communication system.

Fig. 4 is a flowchart of an exemplary process.

### Detailed Description

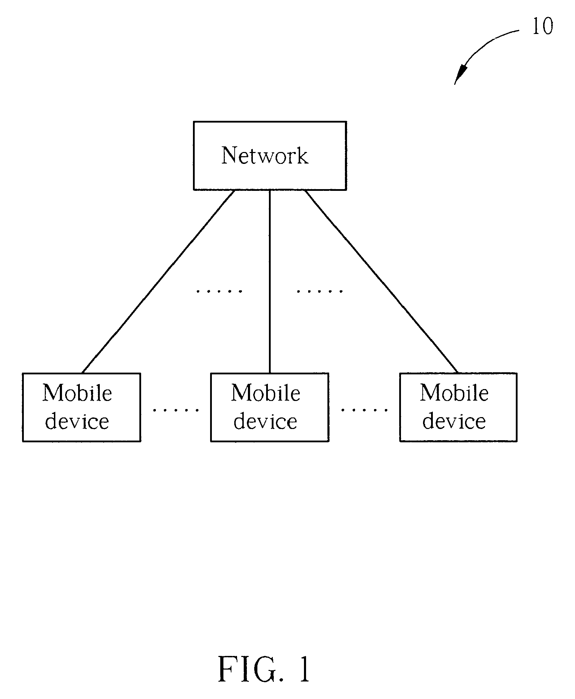

Please refer to Fig. 1, which illustrates a schematic diagram of an exemplary wireless communication system 10. Briefly, the wireless communication system 10 is composed of a network and a plurality of mobile devices. The wireless communication system 10 can be an LTE (long-term evolution) system or any other similar network system. In the LTE system, the network can be referred as a EUTRAN (evolved-UTRAN) comprising a plurality of eNBs (e.g. base stations) or a core network entity (e.g. Mobility Management Entity called MME), whereas the mobile devices are referred as to user equipments (UEs). The UEs can be devices such as mobile phones, computer systems, etc. This terminology will be used throughout the application for ease of reference. However, this should not be construed as limiting the disclosure to any one particular type of network. In some examples, the network and the UE may be seen as a transmitter or receiver according to transmission direction, e.g., for uplink (UL), the UE is the transmitter and the network is the receiver, and for downlink (DL), the network is the transmitter and the UE is the receiver.

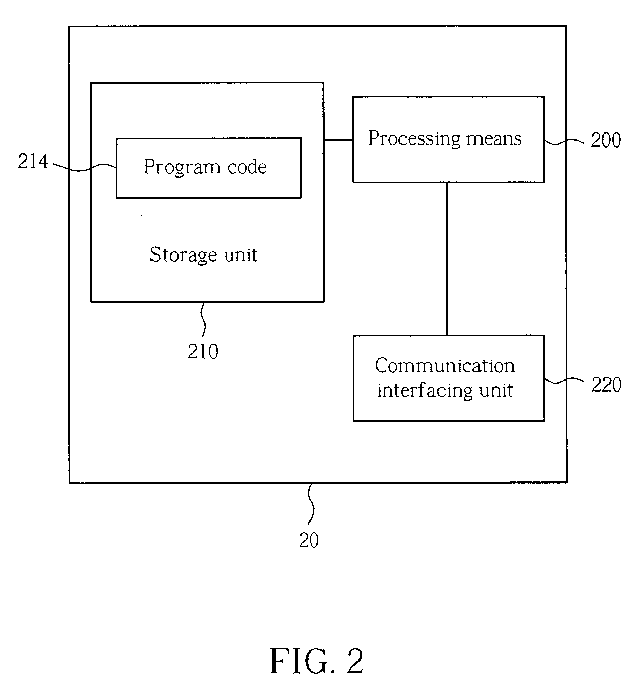

Fig. 2 illustrates a schematic diagram of an exemplary communication device 20. The communication device 20 can be the mobile device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

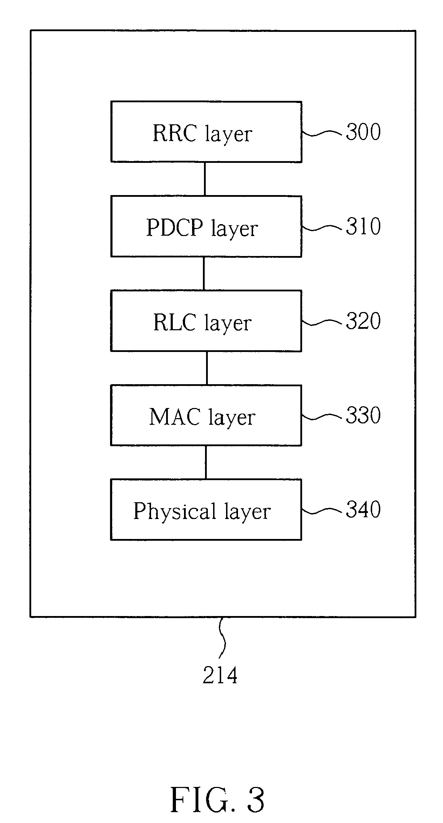

Please refer to Fig. 3, which illustrates a schematic diagram of communication protocol layers for the LTE system. The behaviors of some of the protocol layers may be defined in the program code 214 and executed by the processing means 200. The protocol layers from top to bottom are a radio resource control (RRC) layer 300, a packet data convergence protocol (PDCP) layer 310, a radio link control (RLC) layer 320, a medium access control (MAC) layer 330 and a physical (PHY) layer 340. The RRC layer 300 is used for performing broadcast, paging, RRC connection management, measurement reporting and control, and radio bearer (RB) control responsible for generating or releasing radio bearers (RBs). In addition, the RRC layer includes a RRC_CONNECTED state and a RRC_IDLE state.

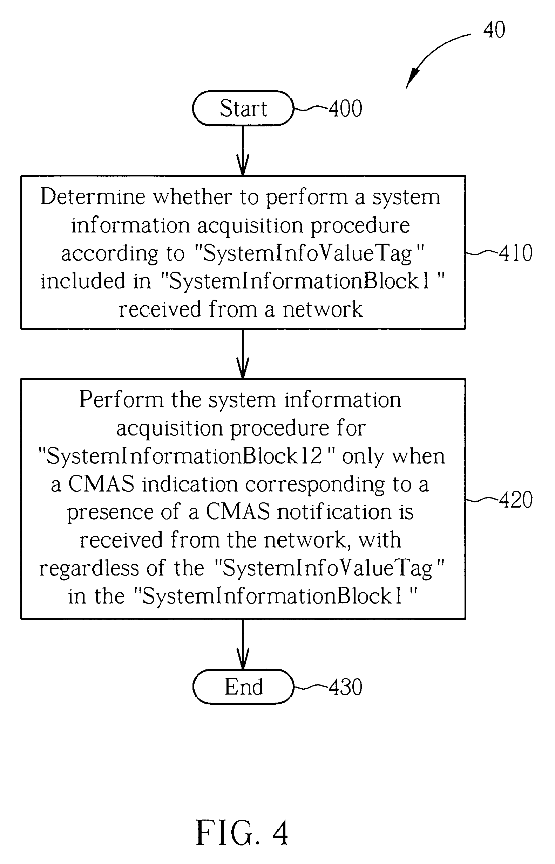

Please refer to Fig. 4, which illustrates a flowchart of an exemplary process 40. The process 40 is utilized in an UE (as the mobile device of Fig. 1) for handling system information acquisition procedure. Note that, the UE supports commercial mobile alert system (CMAS). The process 40 can be compiled into the program code 214 and includes the following steps:

Step 400: Start.

Step 410: Determine whether to perform a system information acquisition procedure according to "SystemInfoValueTag" included in "SystemInformationBlock1" received from a network.

Step 420: Perform the system information acquisition procedure for "SystemlnformationBlock12" only when a CMAS indication corresponding to a presence of a CMAS notification is received from the network, with regardless of the "SystemlnfoValueTag" in the "SystemInformationBlock1 ".

Step 430: End.

According to the process 40, the UE performs the system information acquisition procedure to acquire the "SystemInformationBlock12" (namely the CMAS notification) without consideration of a change of the "SystemInfoValueTag". In other words, the UE performs the system information for "SystemInformationBlock12" only when the CMAS indication corresponding to the CMAS notification is received from the network (i.e. the E-UTRAN). That is, the UE may start acquiring "SystemInformationBlock12" even if the "SystemInfoValueTag" has not changed.

Take an example based on the process 40. When a CMAS capable UE receives a page message including a CMAS indication indicating a presence of a CMAS notification, the UE acquires "SystemInformationBlockType12" (namely CMAS notification) if the "schedulingInfoList" indicates that "SystemInformationBlockType12" is present. After that, the UE receives "SystemInformationBlockType1" in which the "SystemInfoValueTag" is different from the one of the preceding stored "SystemInformationBlockType1 ". In this situation, the UE does not consider the acquired "SystemInformationBlockType12" invalid, and thereby performs system information acquisition procedure for any system information except of "MasterlnformationBlock", "SystemInformationBlock1 ", "SystemInformationBlockType10", "SystemInformationBlockType11" and "SystemInformationBlockType12". In other words, the UE does not perform the system information acquisition procedure to acquire the "SystemInformationBlockType12" when the "SystemInfoValueTag" is changed, whereas the UE performs the system information acquisition procedure for the "SystemInformationBlockType12" only when a new CMAS indication corresponding to the CMAS notification is received (e.g. by a paging message) and the ""schedulinginfoList" indicates that "SystemInformationBlockType12" is present.

Note that, in an embodiment, the "SystemInformationBlockType12" is included in a list of system information (i.e. the "schedulinglnfoList") that are not considered invalid even when the "SystemInfoValueTag" is changed, so as to realize the abovementioned purpose.

On the other hand, the UE does not read "SystemInformationBlockType1" for deriving another "SystemInfoValueTag" for performing the system information acquisition procedure to acquire the "SystemInformationBlockType12" when no valid version of system information is required in the RRC_CONNECTED state or in the RRC_IDLE state. In addition, the required system information in the RRC_CONNECTED state or in the RRC_IDLE state shall be well known in the art, so it is omitted herein.

Based on the process 40, the UE does not automatically perform the system information acquisition procedure for "SystemInformationBlockType12" when the "SystemInfoValueTag" is changed, so as to avoid system information error caused by that the "SystemInformationBlockType12" (or CMAS notification) is no longer present.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exemplary examples and means are provided for handling system information acquisition procedure for the UE, so as to avoid automatically acquiring the CMAS notification upon "SystemInfovalueTag" change.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A method of handling system information acquisition for a mobile device in a wireless communication system, the method comprising:
determining whether to perform a system information acquisition procedure according to a value tag included in a system information received from a network of the wireless communication system; and
performing the system information acquisition procedure for a commercial mobile alert system (CMAS) notification only when an indication corresponding to the CMAS notification is received, with regardless of the value tag in the system information.

2. The method of claim 1, wherein performing the system information acquisition procedure for the CMAS notification only when the indication corresponding to the CMAS notification is received, with regardless of the value tag in the system information comprises:
determining that a first CMAS notification which has been stored in mobile device is not invalid when the value tag in the system information is different from a first value tag of a first system information which has been stored in the mobile device; and
performing the system information acquisition procedure for the CMAS notification when the indication corresponding to the CMAS notification is received.

3. The method of claim 2, wherein the CMAS notification is included in a SystemInformationBlockType12 (SIB12), and performing the system information acquisition procedure for the CMAS notification only when the indication corresponding to the CMAS notification is received, with regardless of the value tag in the system information comprises:
performing the system information acquisition procedure for any system information except of the SystemInformationBlockType12 when the value tag is different from the first value tag.

4. The method of claim 3, wherein determining that the first CMAS notification which has been stored in mobile device is not invalid when the value tag in the system information is different from the first value tag of the first system information which has been stored in the mobile device comprises:
including the SystemInformationBlockType12 into a list of system information that are not determined to be invalid when the value tag is different from the first value tag.

5. The method of claim 1, further comprising:
not reading a second system information for deriving a second value tag for performing the system information acquisition procedure to acquire the CMAS notification when no valid version of system information is required in a radio resource control (RRC) idle state or in a RRC connected state.

6. The method of claim 1, wherein performing the system information acquisition procedure for the CMAS notification only when the indication corresponding to the CMAS notification is received, with regardless of the value tag in the system information comprises:
not performing the system information acquisition procedure to acquire the CMAS notification when the value tag in the system information is different from a first value tag of a first system information which has been stored in the mobile device.

7. A mobile device of a wireless communication system for handling system information acquisition, the mobile device comprising:
means for determining whether to perform a system information acquisition procedure according to a value tag included in a system information received from a network of the wireless communication system; and
means for performing the system information acquisition procedure for a commercial mobile alert system (CMAS) notification only when an indication corresponding to the CMAS notification is received, with regardless of the value tag in the system information.

8. The mobile device of claim 7, wherein performing the system information acquisition procedure for the CMAS notification only when the indication corresponding to the CMAS notification is received, with regardless of the value tag in the system information comprises:
means for determining that a first CMAS notification which has been stored in mobile device is not invalid when the value tag in the system information is different from a first value tag of a first system information which has been stored in the mobile device; and
means for performing the system information acquisition procedure for the CMAS notification when the indication corresponding to the CMAS notification is received.

9. The mobile device of claim 8, wherein the CMAS notification is included in a SystemInformationBlockType12 (SIB12), and performing the system information acquisition procedure for the CMAS notification only when the indication corresponding to the CMAS notification is received, with regardless of the value tag in the system information comprises:
means for performing the system information acquisition procedure for any system information except of the SystemInformationBlockType12 when the value tag is different from the first value tag.

10. The mobile device of claim 9, wherein determining that the first CMAS notification which has been stored in mobile device is not invalid when the value tag in the system information is different from the first value tag of the first system information which has been stored in the mobile device comprises:
means for including the SystemInformationBlockType12 into a list of system information that are not determined to be invalid when the value tag is different from the first value tag.

11. The mobile device of claim 7, further comprising:
means for not reading a second system information for deriving a second value tag for performing the system information acquisition procedure to acquire the CMAS notification when no valid version of system information is required in a radio resource control (RRC) idle state or in a RRC connected state.

12. The mobile device of claim 7, wherein performing the system information acquisition procedure for the CMAS notification only when the indication corresponding to the CMAS notification is received, with regardless of the value tag in the system information comprises:
means for not performing the system information acquisition procedure to acquire the CMAS notification when the value tag in the system information is different from a first value tag of a first system information which has been stored in the mobile device.
